# EUROPÄISCHE PATENTANMELDUNG

(11) **EP 2 851 355 A1**
(43) Veröffentlichungstag der Anmeldung: **25.03.2015**
(21) Anmeldenummer: 13184973.9
(22) Anmeldetag: 18.09.2013
(51) Int. Cl.: C04B 35/632, C04B 35/634

(54) **Verwendung von Polyvinylisoacetalen für Keramikformulierungen**

(71) Anmelder: Kuraray Europe GmbH, 65795 Hattersheim (DE)
(72) Erfinder: Frank, Michael, Dr, 53840 Troisdorf (DE); Greb, Marco, Dr., 53840 Troisdorf (DE)
(74) Vertreter: Kisters, Michael Marcus

(57) **Zusammenfassung**

Verwendung von Polyvinylisoacetalen als Bindemittel in Formulierungen zur Herstellung von keramischen Materialien wie Grünfolien.

## Beschreibung

Die Erfindung betrifft die Verwendung von verzweigten Polyvinylisoacetalen, erhältlich durch Reaktion von Polyvinylalkohol mit verzweigten Aldehyden, in Formulierungen für keramische Anwendungen.

### Technisches Gebiet

Zur Herstellung von Keramiken dienen als Ausgangsmaterialien keramische Schlickermassen bestehend aus keramischen Materialien in Form von Pulvern und flüssiger Träger. Die Schlickermassen werden nach Formgebung in sogenannte Grünkörper, anschließend durch thermische Behandlung in die Keramik überführt. Die zur Herstellung von Keramiken eingesetzten keramischen Schlickermassen werden im Folgenden synonym als "Keramikformulierungen", "slurry", "green sheet", Grünfolie" oder "Formulierungen für keramische Anwendungen" bezeichnet.

Keramische Werkstoffe haben eine lange Tradition, jedoch haben moderne Hochleistungskeramiken bzw. technische Keramiken in den vergangenen Jahren einen weiten Anwendungsbereich erobert, da sie anderen Werkstoffen aufgrund ihrer Härte und ihrer chemischen und thermischen Beständigkeit überlegen sind. Derartige Hochleistungskeramiken werden heutzutage u.a. im Maschinen- und Fahrzeugbau, in der Elektrotechnik oder in der Medizintechnik angewendet.

In der Elektrotechnik werden zur Herstellung sogenannter MLCCs (multi-layer ceramic capacitors)beispielsweise keramische Folien über sogenannte Foliengießverfahren hergestellt. Zur Herstellung solcher Folien werden feine keramische Pulver vermahlen und in Lösungen, Dispersionen, Suspensionen oder Gele überführt. Ein wichtiger Bestandteil dieser Vorstufen ist ein geeignetes Bindemittel, das als Verarbeitungshilfsmittel im späteren Prozess ausgebrannt wird.

Diese Vorstufen werden im Falle keramischer Folien bzw. Platten mittels einer Rakel aus einem sogenannten Gießschuh auf ein umlaufendes Band, das als Trägermaterial dient, aufgegossen. Der sich so bildende keramische Grünkörper in Form einer Folie, auch Tape genannt, wird im späteren Prozessverlauf thermisch behandelt, um alle organischen Bestandteile, einschließlich des Bindemittels, für den nachfolgenden Sinterprozess zu entfernen.

Einem Bindemittel für keramische Anwendungen kommt eine Vielzahl von funktionalen Eigenschaften zu. Im Rahmen der Miniaturisierung in der Elektronik ist der Bedarf an zunehmend leistungsfähigeren Systemen gestiegen, was sich auch auf die Anforderungen an die Leistungsfähigkeit eingesetzter Bindemittel auswirkt.

### Stand der Technik

Die Verwendung von Polyvinylacetalen, insbesondere Polyvinylbutyralen (PVB) als polymere Bindemittel für keramische Anwendungen ist lange bekannt. Hierzu wird in der Veröffentlichung "Fortschrittsberichte der Dt. Keram. Ges. 18 (2004) 35-42" eine Verwendung von PVB für das Foliengießen auf Basis organischer Lösemittel beschrieben. Dabei dient PVB als temporäres Bindemittel während der Herstellung der Grünfolie. Das Ziel ist es hierbei, in der Regel hohe Füllgrade im keramischen Schlicker (Slurry) unter Verwendung möglichst weniger Bindemittelanteile unter gleichzeitiger Erzeugung hoher mechanischer Stabilitäten zu erreichen. Bei der Herstellung von Polyvinylacetalen wird bekanntermaßen Polyvinylalkohol als Rohstoff gewählt, der mit einem reaktiven Aldehyd - in der Regel n-Butyraldehyd-acetalisiert wird. Eine Verwendung bekannter Polyvinylacetale auf Basis von Polyvinylbutyralen ist beispielsweise für keramische Slurries für besonders dünne keramische Folien limitiert. Dünne Folien benötigen hohe mechanische Stabilitäten, die bei Verwendung bekannter Polyvinylacetale auf z.B. n-Butyral-Basis nur durch Erhöhung des Molekulargewichtes bzw. des Polymerisationsgrades zu erreichen sind. Nachteilig ist hierbei, dass eine Verwendung von Polyvinylacetalen mit hohen Molekulargewichten zum einen die Viskosität der Bindemittellösung und damit auch die Slurry-Viskosität signifikant erhöht und damit keine hinreichende Verarbeitbarkeit zulässt und zum anderen für einen keramischen Slurry notwendige Füllgrade aufgrund der starken Verdickung nicht erreicht werden können. Durch die unzureichenden Füllgrade können bestimmte Grünfolien nicht oder nur sehr schwer hergestellt werden.

In DE 103 20 969 A1 sind keramische Zusammensetzungen beschrieben, die Polyvinylacetale enthalten, die sich insbesondere dadurch auszeichnen, einen Rest-Polyvinlylalkohol-Gehalt von 65 - 99 mol-% aufzuweisen.

Die JP 2012-072256 A offenbart Polyvinylacetale zur Verwendung für keramische Slurries, die mit Epoxygruppen modifiziert sind.

Aus der Lehre von WO 2011/102197 ist die Verwendung von Polyvinylacetalen für keramische Grünfolien bekannt, die einen Polymerisationsgrad von 3000-5000, einen Vinylester-Gehalt von 4-23 mol-% und einen Acetalisierungsgrad von 60-80 mol-% aufweisen.

In diesen Publikationen werden entweder Polyvinylacetale basierend auf n-Butyraldehyd offenbart oder aufwändig modifizierte Polyvinylacetale. Die mechanische Stabilität, der Füllgrad des keramischen Grünkörpers und die Viskosität des keramischen Slurries, die mit diesen Systemen ermöglicht werden können, sind verbesserungsfähig.

### Aufgabe der Erfindung

Aufgabe der Erfindung ist es, ein leistungsfähiges Bindemittel für keramische Anwendungen bereitzustellen, das sich dadurch auszeichnet, eine sehr gute Kompatibilität zu den anderen Bestandteilen keramischer Schlickermassen aufzuweisen und dabei hohe Füllgrade von Festkörpern bei vergleichsweiser geringer Viskosität der Schlickerformulierung zu gewährleisten. Eine weitere Aufgabe besteht darin, dass das Bindemittel eine hohe mechanische Stabilität aus der Schlickermasse erhaltener Grünkörper gewährleistet. Darüber hinaus soll sich die Herstellmethode, von denen für bekannte Polyvinylbutyrale nicht signifikant unterscheiden, um eine großtechnische Herstellung zu ermöglichen.

### Lösung / Beschreibung

Die der Erfindung zugrunde liegende Aufgabe wird dadurch gelöst, dass zur Herstellung von keramischen Grünkörpern als Bindemittel ein Polyvinylacetal verwendet wird, das eine strukturelle Verzweigung in der Acetaleinheit aufweist.

Durch Acetalisierung von Polyvinylalkohol mit verzweigten Aldehyden, z.B. iso-Butyraldehyd, hergestellte Polyvinylbutyrale sind bekannte Verbindungen (z.B. aus Fitzhugh, Crozier, J. Pol. Sci. Vol. VIII, No.2, S. 225-241 bzw. Nakamura, Suzuki, J. Pol. Sci., Vol. 34, S 3319-3328(1996)), haben aber auf Grund der im Vergleich zu n-Butyraldehyd geringen industriellen Verfügbarkeit von iso-Butyraldehyd keine technische Bedeutung.

Überraschenderweise wurde gefunden, dass Polyvinylacetale auf Basis von α-verzweigten Aldehyden bzw. Carbonylverbindungen hervorragende mechanische Stabilitäten von keramischen Grünköpern zulassen. Zeitgleich wird eine hinreichende Verarbeitung des keramischen Slurries auf Grund einer unerwarteten, vergleichsweise niedrigen Slurry-Viskosität bei höheren Molekulargewichten ermöglicht. Aufgrund der verbesserten Verarbeitbarkeit können zudem höhere Füllgrade des Slurries erzielt werden.

### Darstellung der Erfindung

Gegenstand der Erfindung ist die Verwendung von Polyvinylisoacetalen als Binder in Formulierungen zur Herstellung von keramischen Materialien, dadurch gekennzeichnet dass die Acetalgruppe der Polyvinylisoacetale aus der Acetalisierung von Polyvinylalkoholen mit einer oder mehreren Carbonylverbindung mit 4 bis 16 Kohlenstoffatomen mit mindestens einer Verzweigung an der alpha-Position zur Carbonylgruppe resultiert.

Durch die erfindungsgemäße Verwendung der Polyvinylisoacetale in Keramikanwendungen ergibt sich der Vorteil, dass bei gleichem Bindemittelgehalt vergleichbarer Verwendung von Polyvinylacetalen mit unverzweigten Gruppen wie n-Acetalgruppen, die mechanische Stabilität des keramischen Grünkörpers, z.B. einer keramischen Grünfolie, derart erhöht ist, dass dünnere Formkörper erhalten werden können. Das wirkt sich z.B. bei der Herstellung dünner keramischer Grünfolien mit Schichtdicken von kleiner 25 µm aus. Zudem ermöglicht die Verwendung erfindungsgemäßer Polyvinylisoacetale hohe Füllgrade und Viskositäten der keramischen Slurries wie sie typischerweise nur mit bekannten Polyvinylacetalen mit niedrigem Molekulargewicht zu erhalten sind.

So ist bei einer vorgegebenen Zielviskosität des keramischen Slurries die Menge an keramischen Füllstoffen und Bindemittel nicht beliebig zu erhöhen. Ein Bindemittel bei gleichem Molekulargewicht mit niedrigerer Viskosität trägt auch weniger zum Anstieg der Gesamtviskosität bei. Somit lassen sich aus Materialien mit hohem Molekulargewicht hochgefüllte Slurries erhalten, die noch eine Verarbeitbarkeit zulassen.

Erfindungsgemäße Polyvinylisoacetale werden bevorzugt durch Umsetzung von Polvinylalkoholen mit einem oder mehreren Aldehyden enthaltend 4 bis 16 Kohlenstoffatomen mit mindestens einer Verzweigung an der alpha- Position zur Carbonylgruppe erhalten. Im Rahmen der vorliegenden Erfindung werden bevorzugt Polyvinylacetale verwendet, deren Acetalgruppe aus einem oder mehreren aliphatischen Aldehyden oder Carbonylverbindungen der Gruppe iso-Butyraldehyd, Pivalaldehyd, Cyclohexylaldehyd, Benzaldehyd, substituierte Benzaldehyde resultiert.

Optional können die Polyvinylisoacetale durch gleichzeitige Umsetzung von Polvinylalkoholen mit
a) einer oder mehreren aliphatischen Carbonylverbindungen mit 4 bis 16 Kohlenstoffatomen mit mindestens einer Verzweigung an der alpha-Position zur Carbonylgruppe und
b) einer oder mehreren weiteren aliphatischen Carbonylverbindungen mit 2 bis 10 Kohlenstoffatomen resultieren.

Der Anteil der Acetalgruppen des Polyvinylisoacetals aus Carbonylverbindungen mit 4 bis 16 Kohlenstoffatomen mit mindestens einer Verzweigungen an der alpha-Position zur Carbonylgruppe kann in Bezug auf die Acetalgruppen des Polyvinylacetals aus den weiteren aliphatischen Carbonylverbindungen mit 2 bis 10 Kohlenstoffatomen 20 bis 95 Mol%, bevorzugt 50-90 Mol% betragen.

Bevorzugt werden als weitere aliphatische Carbonylverbindungen Acetaldehyd und/oder n-Butyraldehyd eingesetzt.

Erfindungsgemäß verwendete Polyvinylisoacetale weisen bevorzugt ein Molekulargewicht von 50.000-600.000 g/mol, bevorzugt 60.000-400.000 g/mol und besonders bevorzugt 100.000-400.000 g/mol, jeweils ermittelt über GPC.
Für keramische Anwendungen werden neben dem (temporären) Bindemittel keramische Partikel, wie Metalloxide, ein Dispergiermedium wie z.B. Lösemittel, Farbstoffe und/oder Pigmente und ggf. Additive wie Weichmacher, Entschäumer, Dispergieradditive, UV- und/oder Oxidationsstabilisatoren, Wachse, Trocknungsverzögerer oder -beschleuniger und/oder Co-Bindemittel enthalten.

Erfindungsgemäß werden Polyvinylisoacetale in einem Anteil von 0,1 - 25 Gew.%, bezogen auf die keramische Formulierungen, verwendet. In einer bevorzugten Ausführung werden 0,5 - 20 Gew.%, besonders bevorzugt 1 - 10 Gew.% eingesetzt.

Im Rahmen der vorliegenden Erfindung ist es auch möglich, Gemische von Polyvinylisoacetalen und den aus dem Stand der Technik bekannten Polyvinylacetalen mit n-Acetalgruppen als Binder für die Herstellung keramischer Slurries einzusetzen.

Weiterer Gegenstand der Erfindung ist daher die Verwendung eines Gemischs von Polyvinylisoacetalen mit mindestens einem weiteren Polyvinylacetal als Bindemittel in Slurryformulierungen, wobei die Acetalgruppe des Polyvinylisoacetals aus einer oder mehreren aliphatischen Carbonylverbindungen mit 4 bis 10 Kohlenstoffatomen mit mindestens einer Verzweigung an der alpha-Position zur Carbonylgruppe resultiert und das mindestens ein weiteres Polyvinylacetal durch die Umsetzung von Polyvinylalkohol mit einer oder mehreren weiteren aliphatischen Carbonylverbindungen mit 2 bis 10 Kohlenstoffatomen erhalten wird.

Die für die Verwendung von Polyvinylisoacetalen beschriebenen besonderen Ausführungsformen gelten ebenfalls in der Verwendung im Gemisch mit den gängigen Polyvinylacetalen.

Bevorzugt werden die weiteren Polyvinylacetale durch Umsetzung von z.B. Acetaldehyd und/oder n-Butyraldehyd mit Polyvinylalkoholen gewonnen. Die Reaktionsbedingungen entsprechen denen der Polyvinylisoacetale. Besonders wird ein Gemisch aus Polyvinylisoacetal, erhältlich durch Umsetzung von Polvinylalkoholen mit verzweigten Carbonylverbindungen und Polyvinylacetal, erhältlich durch Umsetzung von Polvinylalkoholen mit n-Butyraldehyd verwendet.

Bevorzugt enthalten die erfindungsgemäß verwendeten Mischungen 10 bis 90 Gew.% Polyvinylisoacetale und 90 bis 10 % weitere Polyvinylacetale, insbesondere je 50 Gew. %.

Die Herstellmethoden der Polyvinylisoacetale unterscheiden sich nicht wesentlich von denen der Polyvinylacetale mit n-Acetalgruppen. Erfindungsgemäß verwendete Polyvinylisoacetale sind durch Reaktion von mindestens einem Polyvinylalkohol mit mindestens einer der genannten Carbonylverbindungen unter Säurekatalyse erhältlich. Diese Reaktion ist dem Fachmann bekannt und kann z.B. WO 2009/132987 A1 oder EP 09175666.8 entnommen werden.

Üblicherweise wird bei der Herstellung von Polyvinylacetalen zunächst der Polyvinylalkohol unter Erwärmen in Wasser gelöst und im Reaktionsgefäß bei einer Temperatur von ca. 0 bis 20 °C vorgelegt. Hierzu werden in der ersten Verfahrensvariante eine Säure (HCl, HNO₃ oder H₂SO₄) oder in einer weiteren Variante ein oder mehrere Carbonylverbindungen oder Aldehyde zugegeben. Als Carbonylverbindung oder Aldehyd wird bevorzugt aus der Gruppe der Carbonylverbindungen mit mindestestens einer Verzweigung in alpha-Position zu Carbonylgruppe unter Erhalt erfindungsgemäßer Polyvinylisobutyrale eingesetzt.

Je nach Verfahrensvariante wird bei der genannten Temperatur zur Mischung Polyvinylalkohol und Säure die gewünschten Carbonylverbindungen oder zur Mischung Polyvinylalkohol und Carbonylverbindung eine Säure zugegeben. Die jeweilige Zugabe erfolgt, bis der gewünschte Acetalisierungsgrad des Polyvinylacetals erreicht ist und dieser als Feststoff aus der Reaktionsmischung ausfällt. Die Zugabe der Säure bzw. der Carbonylverbindungen in Verfahrensschritt a) kann in verschiedenen Dosierzeiten und/oder mit einer Dosierpause erfolgen.

Zur Vervollständigung der Reaktion wird die Reaktionsmischung in Verfahrensschritt b) auf 30 bis 90 °C, bevorzugt 35 bis 80 °C erhitzt und bei dieser Temperatur eine gewisse Zeit gehalten. Bei dieser so genannten Heißmodifizierung tritt die Vervollständigung der Acetalisierungsreaktion ein.

Bevorzugt weisen die erfindungsgemäß verwendeten Polyvinylisoacetale einen Restalkoholgehalt ausgedrückt durch Polyvinylalkholgehalt von 10 bis 35 Gew.%, besonders bevorzugt von 18 bis 33 Gew.% und einen Acetatgehalt von 0,1 bis 20 Gew.%, besonders bevorzugt von 1 Gew.% bis 16 Gew.% auf.

### Messmethoden:

a) Bestimmung des Polyvinylacetatgehalts
   Unter dem Polyvinylacetatgehalt wird der gewichtsprozentige Anteil an Acetylgruppen verstanden, der sich aus dem Verbrauch der für die Verseifung von 1 g Substanz notwendigen Menge Kalilauge ergibt.
   Bestimmungsmethode (in Anlehnung an EN ISO 3681):
   Etwa 2 g der zu untersuchenden Substanz werden in einem 500 ml Rundkolben auf 1 mg genau eingewogen und mit 90 ml Ethanol und 10 ml Benzylalkohol am Rückfluss gelöst. Nach dem Abkühlen wird die Lösung mit 0,01 n NaOH gegen Phenolphthalein neutral gestellt. Anschließend werden 25,0 ml 0,1 n KOH zugegeben und 1,5 Stunden am Rückfluss erhitzt. Man lässt den Kolben verschlossen abkühlen und titriert den Laugenüberschuss mit 0,1 n Salzsäure gegen Phenolphthalein als Indikator bis zur bleibenden Entfärbung zurück. In gleicher Weise wird eine Blindprobe behandelt. Der PV-Acetatgehalt berechnet sich wie folgt: PV-Acetatgehalt [%] = (b-a)*86/E, mit a = Verbrauch an 0,1 n KOH für Probe in ml, b = Verbrauch an 0,1 n KOH für Blindversuch in ml und E = Einwaage der zu untersuchenden Substanz trocken in g.
b) Bestimmung des Polyvinylalkoholgruppengehalts
   Der Polyvinylalkoholgruppengehalt (Polyvinylalkoholgehalt) ist der Anteil an Hydroxylgruppen, der durch die nachträgliche Acetylierung mit Essigsäureanhydrid nachweisbar ist. Bestimmungsmethode (in Anlehnung an DIN 53240):
   Etwa 1 g Mowital wird in einem 300 ml Schliff-Erlenmeyerkolben auf 1 mg genau eingewogen, 10,0 ml Essigsäureanhydrid-Pyridin-Gemisch (23:77 V/V) zugefügt und 15-20 Stunden auf 50°C erwärmt. Nach dem Abkühlen kommen 17 ml 1,2-Dichlorethan hinzu und es wird kurzzeitig umgeschwenkt. Anschließend gibt man unter Rühren 8 ml Wasser zu, verschließt den Kolben mit einem Stopfen und rührt 10 Minuten. Kolbenhals und Stopfen werden mit 50 ml E-Wasser abgespült, mit 5 ml n-Butanol überschichtet und die freie Essigsäure mit 1 n Natronlauge gegen Phenolphthalein titriert. In gleicher Weise wird eine Blindprobe behandelt. Der Polyvinylalkoholgehalt berechnet sich wie folgt: Polyvinylalkoholgehalt [%] = (b-a)*440/E, mit a = Verbrauch an 1 n NaOH für Probe in ml, b = Verbrauch an 1 n NaOH für Blindprobe in ml, und E = Einwaage der zu untersuchenden Substanz trocken in g.
c) Bestimmung der Viskosität der Polyvinylacetale
   Die Viskosität der verwendeten Polyvinylacetale wird gemäß DIN 53015 an einer Lösung in Ethanol, n-Buthanol oder MEK (Methylethylketon) bei 20 °C im Hoeppler-Viskosimeter bestimmt.
d) Bestimmung der Viskosität der keramischen Slurries.
   Die Ermittlung der Slurry-Viskositäten erfolgte nach allgemeiner Methode am Rheometer Rheostress RS 6000 der Firma Fisher Scientific und einer Platte-Platte Geometrie (40 mm) bei 25°C, ohne Vorscherung und einer Scherrate von 5 s⁻¹.
e) Die Bestimmung der Zugfestigkeiten der Cast- bzw. keramischen Folien erfolgte in Anlehnung an die DIN 53455 und den Entwurf EN 20527 Teil 1. Als Gerät wurde eine Zug- und Druckfestigkeitsprüfmaschine des Herstellers CADIS vom Typ BRP 201 verwendet.

### Beispiele:

Nachfolgend erfolgt die Angabe von Beispielen, ohne auf diese beschränkt zu sein.

Es wurden erfindungsgemäße Beipiele für Polyvinylisoacetale durch säurekatalysierte Umsetzung von iso-Butyraldehyd und als Vergleichsbeispiele Polyvinylacetale aus durch säurekatalysierte Umsetzung von n-Butyraldehyd mit dem gleichem Polyvinylalkohol hergestellt und auf ihre Verwendung in Slurryformulierungen geprüft.

### Allgemeine Herstellvorschrift der Polyvinyl(iso-/n-)acetale

Zu Polyvinylalkohol gelöst in Wasser (m_{H2O}) wird bei 40°C der entsprechende Aldehyd (mₙ-_{BuA} / m_{iso-BuA}) zudosiert. Die Reaktion wird durch den Zusatz 20%iger Salzsäurelösung (m_{HCl}) bei 15°C gestartet und die Fällung nach Erwärmung der Reaktionslösung ca. 50°C vervollständigt. Der ausgefallene Feststoff wird abfiltriert und hinreichend mit Wasser gewaschen, in Wasser suspendiert und die erhaltene Produktsuspension mit 2N Natronlauge versetzt und alkalisch gestellt, und anschließend erneut mit Wasser gewaschen und abfiltriert. Anschließend wird das Produkt getrocknet.

Beispiele 1 bis 4 sind gemäß der Erfindung, Beispiele 5 bis 8 stellen Vergleichsbeispiele (Vgl. 1-4) dar.

**Tabelle 1: Einwaagen zur Herstellung der Beispiele 1-8.**

| Beispiel | m_{PVOH} [g] | η_{PVOH} 4% Wasser [mPas] | HG_{PVOH} [mol%] | m_{H2O} [mL] | m_{n-Bu A} [g] | m_{iso-BuA} [g] | m_{HCl} [mL] |
|---|---|---|---|---|---|---|---|
| 1 | 650 | 10 | 98,4 | 6500 | - | 390 | 780 |
| 2 | 650 | 15 | 99,0 | 6500 | - | 390 | 780 |
| 3 | 650 | 28 | 99,2 | 6500 | - | 360 | 1100 |
| 4 | 400 | 85 | 88,2 | 7500 | - | 240 | 670 |
| 5 (Vgl. 1) | 650 | 10 | 98,4 | 6500 | 364 | - | 780 |
| 6 (Vgl. 2) | 550 | 15 | 99,0 | 6500 | 370 | - | 780 |
| 7 (Vgl. 3) | 550 | 28 | 99,2 | 6500 | 330 | - | 1100 |
| 8 (Vgl. 4) | 400 | 85 | 88,2 | 7500 | 200 | - | 670 |

**Tabelle 2: Analytische Kenndaten der Beispiele 1-8**

| | Bsp. 1 | Bsp. 5 (Vgl. 1) | Bsp. 2 | Bsp. 6 (Vgl. 2) | Bsp. 3 | Bsp. 7 (Vgl. 3) | Bsp. 4 | Bsp. 8 (Vgl. 4) |
|---|---|---|---|---|---|---|---|---|
| PVOH [Gew.%] | 20,3 | 20,4 | 20,2 | 20,3 | 20,5 | 20,5 | 21,9 | 22,0 |
| PVOAc [Gew.%] | 1,9 | 2,3 | 1,7 | 1,6 | 1,6 | 1,3 | 14,7 | 14,5 |
| 10% Visk. in Ethanol* [mPas] | 180 | 235 | 442 | 625 | 71,3 ¹⁾ | 83,7 ¹⁾ | 334 ¹⁾ | 395 ¹⁾ |

| | | | | | | | | |
|---|---|---|---|---|---|---|---|---|
| ¹⁾ Viskosität 5%ig in Ethanol bestimmt | | | | | | | | |

Die angegebenen Werte für die Lösungsviskositäten in Tabelle 2 zeigen, dass die Beispiele von Polyvinylisoacetalen in Lösung niedrigere Lösungsviskositäten aufweisen als vergleichbare Polyvinylacetale erhalten aus n-Butyraldehyd.

Zur weiteren Charakterisierung wurde die Reißfestigkeit als Maß für die mechanische Festigkeit für Beispiele 1-8 anhand von Zugfestigkeitsmessung an Castfolien bestimmt.

### Allgemeine Herstellungsvorschrift für Castfolien

Zur Herstellung der Castfolien wird das Polyvinylacetal als Pulver über eine Extrusionsanlage mit Doppelschneckenextruder (Fa. Leistritz) bei Prozesstemperaturen von 230-260°C aufgeschmolzen und bei 200 bar über eine Breitschlitzdüse (2 mm Düsenspalt, Düsentemperatur 240-270°C) ausgetragen und auf eine Kühlwalzeneinheit ausgebracht. Die Einstellung der Dicke der Folie auf 150 µm Zieldicke erfolgte durch die entsprechende Anpassung der Abzugsgeschwindigkeiten der Folienabzugseinheit.

Die angegebenen Werte in Tabelle 3 für die Reißfestigkeiten zeigen, dass Folien von Polyvinylisoacetalen höhere Reißfestigkeitswerte und demzufolge eine höhere mechanische Festigkeit aufweisen als vergleichbare Polyvinylacetale erhalten aus n-Butyraldehyden.

### Herstellung der Slurry-Formulierungen (Beispiele 9-16)

### Allgemeine Herstellvorschrift

Es wird in einem 380 ml Glas das Lösemittelgemisch (azeotropes Toluol-Ethanol-Gemisch (32:68) entsprechend des Zielfeststoffgehaltes und der Weichmacher 3G8 vorgelegt. Am Dissolver (30 mm Zahnscheibe, 3400 UPM) wird das entsprechende Bindemittel, das gemäß den Beispielen 1 - 6 hergestellt wurde, eingerührt. Es wird für weitere 15 Minuten nachgerührt. Portionsweise wird unter Rühren das Keramikpulver (Al₂O₃-Pulver, Almatis A 16 SG), zugegeben. Dieses wurde vorher für 24 h bei 100°C nachgetrocknet. Es wird dann für 25 Minuten nachgerührt. Anschließend werden Zirkoniumkugeln (Rimax-Mahlperlen, 1,8-2,0 mm, ZrO₂ 58 % (Firma Mühlmeier) im Volumenverhältnis 1:1 zugesetzt und das Glas für 24 h auf das Rollenmischgerät gegeben. Nach 24 h werden die Zirkniumkugeln abfiltriert. An den hergestellten Slurries der Beispiele 9-16 wurden die Viskositäten gemäß allgemeiner Messmethoden bei einer Scherrate von 5 s⁻¹ bestimmt.

### Allgemeine Herstellung keramischer Folien

Dazu werden die hergestellten keramischen Slurries für einige Stunden zum Entgasen stehen gelassen. Im Anschluss wird der keramische Slurry mit einem Lackschichtausstreicher (System Wasag, Model 288, Firma Erichsen) in einer Nassfilmschichtstärke von 1000 µm auf eine Triacetatfolie als Trägerfilm aufgezogen. Die Folien der Beispiele 9-16 wurden bei 25°C getrocknet und im Anschluss vom Trägerfilm isoliert und die mechanischen Kenndaten bestimmt (siehe Tabelle 4).

Aus Tabelle 4 wird ersichtlich, dass keramische Folien hergestellt mit Polyvinylisoacetalen als Bindemittel bei gleichem Feststoffgehalt höhere Reißfestigkeitswerte aufweisen und höherer Kraft widerstehen als vergleichbare Polyvinylacetale erhalten aus n-Butyraldehyd. Beispiel 12 im Vergleich zu Beispiel 16 verdeutlicht, dass sich bei Polyvinylacetalen mit vergleichbar hohen Molekulargewichten die Polyvinylisoacetale im Vergleich zu deren n-Acetalanaloga zu Slurries formulieren lassen, die sich in keramische Folien überführen lassen. Beispiel 12 (Polyvinylisoacetal) im Vergleich zu Beispiel 14 (Polyvinyl-n-acetal) zeigt, dass bei keramischen Slurries mit gleichem Feststoffgehalt durch Verwendung von Polyvinylisoacetalen keramische Folien mit signifikant höheren Reißfestigkeiten erhalten lassen.

**Tabelle 3: Reißfestigkeitswerte für Castfilme aus Beispielen 1-8**

| | Bsp. 1 | Bsp. 5 (Vgl. 1) | Bsp. 2 | Bsp. 6 (Vgl. 2) | Bsp. 3 | Bsp. 7 (Vgl. 3) | Bsp. 4 | Bsp. 8 (Vgl. 4) |
|---|---|---|---|---|---|---|---|---|
| Rmax [N/mm²] | 67,3 | 58,5 | 67,9 | 58,8 | 68,9 | 60,6 | 77,1 | 68,3 |
| Schichtstärke Castfilm [µm] | 149 | 148 | 151 | 149 | 150 | 152 | 149 | 150 |

**Tabelle 4: Mengenangaben zur Herstellung von Gießfolien (Beispiele 9-16) hergestellt aus Beispielen 1-8 mit analytischen Daten**

| | Bsp. 9 | Bsp. 13 | Bsp. 10 | Bsp. 14 | Bsp. 11 | Bsp. 15 | Bsp. 12 | Bsp. 16 |
|---|---|---|---|---|---|---|---|---|
| Keramische Gießfolie hergestellt mit | Bsp. 1 | Bsp. 5 | Bsp. 2 | Bsp. 6 | Bsp. 3 | Bsp. 6 | Bsp. 4 | Bsp. 8 |
| Lösemittelgemisch [g] (Toluol/Ethanol=32:68) | 87 | 87 | 99 | 99 | 116 | 116 | 99 | 99 |
| Keramikpulver (Almatis A 16 SG) [g] | 127 | 127 | 127 | 127 | 127 | 127 | 127 | 127 |
| Bindemittel [g] | 10,7 | 10,7 | 10,7 | 10,7 | 10,7 | 10,7 | 10,7 | 10,7 |
| Weichmacher 3G8 [g] | 10,2 | 10,2 | 10,2 | 10,2 | 10,2 | 10,2 | 10,2 | 10,2 |
| Feststoffgehalt [Gew%] | 63 | 63 | 60 | 60 | 56 | 56 | 60 | 60 |
| Slurry-Viskosität (bei Scherrate von 5 s^-1) [mPa*s] | 11200 | 12300 | 14200 | 16400 | 15800 | 33900 | 37100 | Nicht bestimmbar¹⁾ |
| Reißfestigkeit (Rmax) [N/mm^2] | 4,23 | 2,82 | 3,50 | 2,23 | 5,40 | 3,89 | 10,2 | Nicht bestimmbar¹⁾ |
| Kraft (Fmax) [N] | 12, 9 | 9,2 | 11,7 | 7,4 | 14,7 | 7,1 | 22,8 | Nicht bestimmbar¹⁾ |

| | | | | | | | | |
|---|---|---|---|---|---|---|---|---|
| 1) Keramische Slurryformulierung zu dick und nicht zu einem Film verarbeitbar | | | | | | | | |

## Patentansprüche

1. Verwendung von Polyvinylisoacetalen als Binder in Formulierungen zur Herstellung von keramischen Materialien, **dadurch gekennzeichnet dass** die Acetalgruppe der Polyvinylisoacetale aus einer oder mehreren aliphatischen Carbonylverbindungen mit 4 bis 10 Kohlenstoffatomen mit mindestens einer Verzweigung an der alpha- oder beta-Position zur Carbonylgruppe resultiert.

2. Verwendung nach Anspruch 1 **dadurch gekennzeichnet dass** die Polyvinylisoacetale durch gleichzeitige Umsetzung von Polvinylalkoholen mit
a) einer oder mehreren aliphatischen Carbonylverbindungen mit 4 bis 10 Kohlenstoffatomen mit mindestens einer Verzweigung an der alpha- oder beta-Position zur Carbonylgruppe und
b) einer oder mehreren weiteren aliphatischen Carbonylverbindungen mit 2 bis 10 Kohlenstoffatomen resultiert.

3. Verwendung nach Anspruch 1 oder 2, **dadurch gekennzeichnet, dass** als aliphatische Carbonylverbindung mit 4 bis 10 Kohlenstoffatomen mit mindestens einer Verzweigung an der alpha- oder beta-Position zur Carbonylgruppe mindestens eine Verbindung der Gruppe iso-Butyraldehyd, iso-Valeraldehyd, (alpha)-Isovaleraldehyd [2-Methylbutanal], (beta)-Isovaleraldeyhd [3-Methylbutanal] und Pivalinaldehyd [2,2-dimethylpropanal] eingesetzt wird.

4. Verwendung nach einem der Ansprüche 1 bis 3, **dadurch gekennzeichnet, dass** die Polyvinylisoacetale einen Restalkoholgehalt von 10% - 35 Gew.% aufweisen.

5. Verwendung nach einem der Ansprüche 1 bis 4, **dadurch gekennzeichnet, dass** die Polyvinylisoacetale einen Acetatgehalt von 0,1% - 20% aufweisen.

6. Verwendung nach einem der Ansprüche 1 bis 5, **dadurch gekennzeichnet, dass** die Polyvinylisoacetale eine um mindestens 10 % geringere Viskosität als die entsprechenden Polyvinyl(n)acetale aufweisen.

7. Verwendung eines Gemischs von Polyvinylisoacetalen mit mindestens einem weiteren Polyvinylacetal als Binder in Formulierungen zur Herstellung von keramischen Materialien, **dadurch gekennzeichnet, dass** die Acetalgruppe des Polyvinylisoacetals aus einer oder mehreren aliphatischen Carbonylverbindungen mit 4 bis 10 Kohlenstoffatomen mit mindestens einer Verzweigung an der alpha- oder beta-Position zur Carbonylgruppe resultiert und das mindestens ein weiteres Polyvinylacetal durch die Umsetzung von Polyvinylalkohol mit einer oder mehreren weiteren aliphatischen Carbonylverbindungen mit 2 bis 10 Kohlenstoffatomen erhalten wird.

8. Verwendung nach Anspruch 7, **dadurch gekennzeichnet, dass** die Polyvinylisoacetale durch Umsetzung von Polvinylalkoholen mit iso-Butyraldehyd und die Polyvinylacetale durch Umsetzung von Polvinylalkoholen mit n-Butyraldehyd erhalten werden.
